# EUROPÄISCHE PATENTANMELDUNG

(11) **EP 1 074 785 A1**
(43) Veröffentlichungstag der Anmeldung: **07.02.2001**
(21) Anmeldenummer: 00116493.8
(22) Anmeldetag: 31.07.2000
(51) Int. Cl.: F17C 11/00, C01B 3/00

(54) **Behälter zur Speicherung gasförmiger Medien**

(30) Priorität: 05.08.1999 DE 19936952
(71) Anmelder: DaimlerChrysler Aerospace AG, 85521 Ottobrunn (DE)
(72) Erfinder: Hill, Wolfgang, Dipl.-Ing., 28205 Bremen (DE)
(74) Vertreter: Hansmann, Dierk, Dipl.-Ing.

(57) **Zusammenfassung**

Ein Behälter zur Speicherung von Gasen bzw. gasförmigen Medien besteht aus einer äußeren Hülle (1,11), in deren Inneren ein Körper (2,12) aus einem Keramikschaum angeordnet ist. Zur Abgabe der gespeicherten Gasmoleküle ist der Körper (2,12) entweder mit einer elektrischen Spannungsquelle (3) oder mit einer Aufheizeinrichtung (13) verbunden, über die jeweils auch die Regelung der Desorptionsrate erfolgt.

## Beschreibung

Die Erfindung betrifft einen Behälter zur Speicherung von Gasen oder gasförmigen Medien mit einer äußeren Hülle sowie einem Auslaßventil.

Für die Speicherung und Lagerung von Gasen bzw. gasförmigen Medien werden derzeit überwiegend konventionelle Hohlraumtanks verwendet. Bei diesen bekannten Tanks bestimmen der Druck und die Temperatur im Inneren des Tanks die freie Weglänge der zu speichernden Gasmoleküle und damit letzlich das Volumen und die Masse derartiger Behälter.

Aufgabe der Erfindung ist es, einen Speicherbehälter der eingangs genannten Art so auszubilden, daß bei gleicher Speicherkapazität seine Masse und sein Volumen deutlich reduziert werden können.

Die Erfindung löst diese Aufgabe, indem sie vorsieht, daß im Inneren eines derartigen Speicherbehälters ein Körper aus einem Keramikschaum angeordnet ist. Dieser Keramikschaum ist in vorteilhafter Ausgestaltung der Erfindung elektrisch leitend ausgebildet.

Bei dem Keramikschaumtank nach der Erfindung werden die Gasmoleküle auf den Oberflächen des Keramikschaums angelagert und es werden damit die freien Weglängen zwischen den Molekülen drastisch reduziert. Da zugleich die gesamte Oberfläche des porösen Keramikschaums im Verhältnis zum Volumen sehr groß ist, können in einem derartigen Keramikschaumblock wesentlich mehr Gasmoleküle als in einem konventionellen Tank gleichen Volumens untergebracht werden.

Der erfindungsgemäße Keramikschaumtank kann sowohl für terrestrische als insbesondere auch für Raumfahrtanwendungen genutzt werden. Unabhängig von der jeweiligen Anwendung liegen seine Hauptvorteile nicht nur in der deutlich verringerten Tankmasse und dem Tankvolumen, sondern vor allem auch darin, daß verglichen mit herkömmlichen Tanks, bei gleichem Gasvolumen der Tankinnendruck wesentlich reduziert werden kann. Damit ergibt sich sowohl eine Verringerung des Gefahrenpotentials als auch die Möglichkeit der Verwendung erheblich kostengünstigerer Peripheriekomponenten, wie Druckminderer und Ventile, die in diesem Fall aus dem Bereich des Niederdruckbehälterbaus entstammen können.

Insbesondere für Raumfahrtanwendungen ergeben sich dadurch deutliche Vorteile, nämlich zum einen eine Erhöhung des Nutzlastpotentials von Startraketen bzw. eine Reduzierung der Startkosten und zum anderen einen wesentliche Verlängerung der Lebensdauer von Satelliten, die bei ansonsten gleicher Tankmasse und gleichem Tankvolumen aus dem Mitführen von zusätzlichem Treibstoff resultiert. Außerdem lassen sich wesentlich vereinfachte Konfigurationen realisieren, da die Keramikschaumblöcke in praktisch beliebiger Form einsetzbar sind und, insbesondere im Bereich der Raumfahrttechnik von erheblicher Bedeutung, es eröffnet sich die Möglichkeit einer Verwendung kostengünstigerer Bauteile und einer Reduzierung der Sicherheitsanforderungen durch die geringeren operationellen Drücke des Systems.

Nachfolgend soll die Erfindung an Hand von zwei in der Zeichnung dargestellten Ausführungsbeispielen näher erläutert werden. Es zeigen jeweils in schematischer Darstellung
- Fig. 1: einen Schnitt durch einen ersten Keramikschaumtank und
- Fig. 2: einen Schnitt durch einen zweiten Keramikschaumtank.

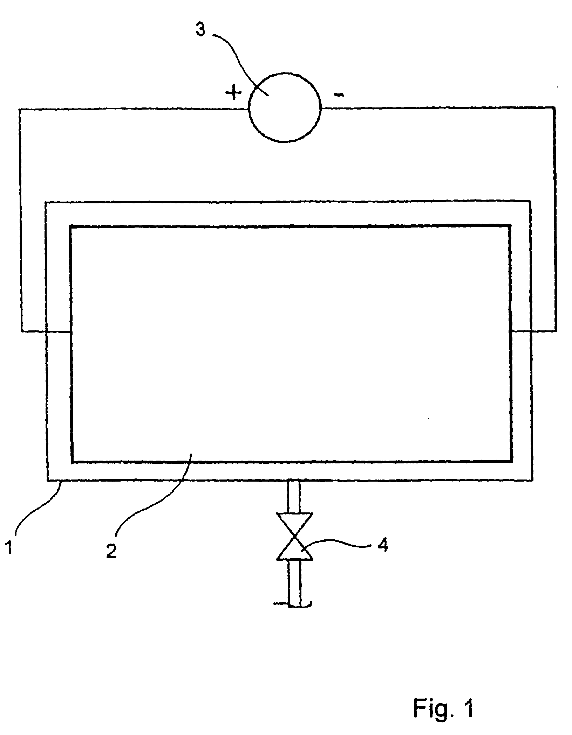

Der in Fig. 1 dargestellte Speicherbehälter besteht aus einer äußeren gasdichten Hülle 1, die einen Keramikschaumblock 2 umschließt. Dieser Keramikschaumblock 2 besteht aus einem Material, das den elektrischen Strom leitet. Im Fall des hier beschriebenen Ausführungsbeispiels handelt es sich dabei um Polysirane mit eingelagerten Metallpartikeln. Der Keramikschaumblock 2 ist mit einer externen Spannungsquelle 3 verbunden. Vervollständigt wird die Anordnung durch ein Auslaßventil 4.

Die beim Auffüllen des Tanks in diesen gelangenden Gasmoleküle, wie beispielsweise N₂ , CO₂ ,H₂ lagern sich an den freien Oberflächen des Keramikschaumblocks 2 an bzw. werden von diesen absorbiert. Durch das Anlegen einer elektrischen Spannung an den elektrisch leitenden Keramikschaumblock 2 werden die Gasmoleküle veranlaßt, sich von dessen Oberfläche zu lösen. Der Druck innerhalb des Tanks bzw. die Desorptionsrate der Gasmoleküle von der Oberfläche läßt sich durch die Höhe der angelegten Spannung regeln. Die gelösten bzw. desorbierten Gasmoleküle werden über das Auslaßventil 4 aus dem Tank entnommen.

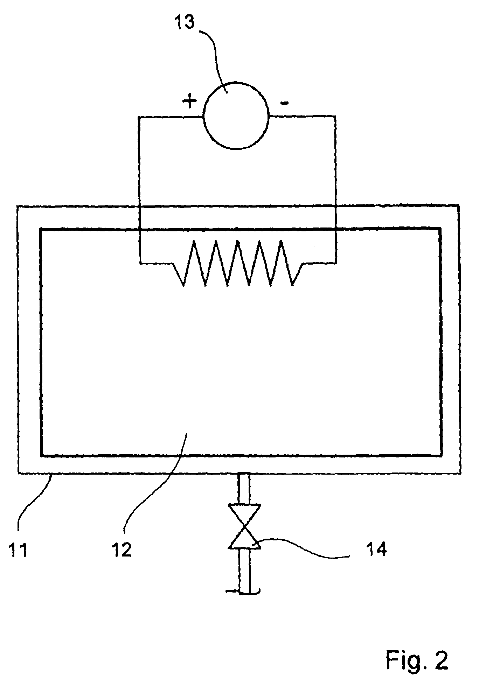

Auch bei dem in Fig. 2 dargestellten zweiten Ausführungsbeispiel besteht der Speicherbehälter aus einer äußeren Hülle 11, die wiederum einen Keramikschaumblock 12 umschließt. Letzterer ist im Fall des hier dargestellten Ausführungsbeispiels mit einer elektrischen Aufheizvorrichtung 13 versehen und die Regelung der Desorptionsrate bzw. des Tankinnendrucks erfolgt in diesem Fall durch das Zuführen thermischer Energie. Diese bewirkt wieder die Desorption der an den Oberflächen des Keramikschaumblocks 12 adsorbierten Gasmoleküle, die auch in diesem Fall wieder über ein Auslaßventil 14 aus dem Tank entnommen werden.

Der Druck innerhalb des Tanks bzw. die Desorptionsrate läßt sich durch die Menge der zugeführten thermischen Energie regeln. Hierbei ist die elektrische Leitfähigkeit des Keramikschaums nicht erforderlich.

## Patentansprüche

1. Behälter zur Speicherung von Gasen und gasförmigen Medien mit einer äußeren Hülle sowie einem Auslaßventil, dadurch gekennzeichnet, daß im Inneren der Hülle (1, 11) ein Körper (2, 12) aus einem Keramikschaum angeordnet ist.

2. Behälter nach Anspruch 1, dadurch gekennzeichnet, daß der Keramikschaum den elektrischen Strom leitet und daß der Körper (2) mit einer elektrischen Spannungsquelle (3) verbunden ist.

3. Behälter nach Anspruch 1 oder 2, dadurch gekennzeichnet, daß der Körper (12) mit einer Aufheizeinrichtung (13) verbunden ist.
